# EUROPEAN PATENT SPECIFICATION

(11) **EP 3 084 182 B1**
(45) Date of publication and mention of the grant of the patent: **30.12.2020**
(21) Application number: 14870702.9
(22) Date of filing: 17.11.2014
(51) Int. Cl.: F02C 7/12, F02C 7/18, F01D 25/12, F01D 5/18, F23R 3/00

(54) **GAS TURBINE ENGINE COMPONENT COOLING CAVITY WITH VORTEX PROMOTING FEATURES**
KÜHLHOHLRAUM FÜR GASTURBINENMOTORKOMPONENTE WIRBELSTIMULIERENDER FUNKTION
CAVITE DE REFROIDISSEMENT DE COMPOSANTS DE TURBINE A GAZ AVEC ELEMENTS FAVORISANT LA GENERATION DE TOURBILLONS

(30) Priority: 20.12.2013 US 201361919286 P
(43) Date of publication of application: 26.10.2016
(73) Proprietor: United Technologies Corporation, Farmington, CT 06032 (US)
(72) Inventor: LORICCO, Nicholas M., Coventry, Connecticut 06238 (US); AUXIER, James T., Bloomfield, Connecticut 06002 (US); SNYDER, Brooks E., Nova Scotia B3A 2M9 (CA); SLAVENS, Thomas N., Moodus, CT 06469 (US)
(74) Representative: Dehns
(86) International application number: PCT/US2014/065858
(87) International publication number: WO 2015/094531

(56) References cited:
- WO-A1-2004/035992
- GB-A- 2 498 551
- KR-A- 20110 079 075
- US-A- 4 514 144
- US-A- 5 993 156
- US-A1- 2003 086 785
- US-A1- 2003 086 785
- US-A1- 2006 120 868
- US-A1- 2007 014 664
- US-A1- 2009 196 733
- US-A1- 2010 139 903

## Description

### BACKGROUND

This disclosure relates to a gas turbine engine, and more particularly to a gas turbine engine component that includes a cooling cavity. The cooling cavity may be provided with a plurality of vortex promoting features that induce a vortexing flow of a cooling fluid through the cavity.

Gas turbine engines typically include a compressor section, a combustor section, and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Due to their exposure to hot combustion gases, many gas turbine engine components employ internal cooling schemes that channel a dedicated cooling fluid for cooling the component. Thermal energy is transferred from the component to the cooling fluid as it circulates through the cooling scheme to convectively cool the component. Some cooling schemes may additionally rely on film cooling holes that return a portion of the cooling fluid to the gas path as a layer of film that protects the component against the relatively harsh environment of the gas path.

KR 2011 0079075 A discloses a gas turbine engine component as set forth in the preamble of claim 1.

US 5,993,156 A discloses a turbine vane cooling system.

### SUMMARY

From a first aspect, the invention provides a gas turbine engine component as recited in claim 1.

In a non-limiting embodiment of the foregoing component, the component is one of a blade, a vane, a blade outer air seal (BOAS), a combustor liner and a turbine exhaust case liner.

In a further non-limiting embodiment of any of the foregoing components, the cavity includes a bowed shape.

In a further non-limiting embodiment of any of the foregoing components, the cavity includes a serpentine shape.

In a further non-limiting embodiment of any of the foregoing components, the cavity includes a helical shape.

In a further non-limiting embodiment of any of the foregoing components, the helical pattern is singularly helical.

In a further non-limiting embodiment of any of the foregoing components, the helical pattern is dually helical.

In a further non-limiting embodiment of any of the foregoing components, the helical pattern includes a first helix that extends in parallel with a second helix.

In a further non-limiting embodiment of any of the foregoing components, the helical pattern is multiply helical.

From another aspect, there is provided a gas turbine engine as recited in claim 10.

In a non-limiting embodiment of the foregoing gas turbine engine, the helical pattern extends along a direction of flow through the cavity.

In a further non-limiting embodiment of either of the foregoing gas turbine engines, the cavity includes one of a bowed, serpentine, helical, conical or contoured shape.

From yet another aspect, there is provided a method as recited in claim 11.

In a non-limiting embodiment of the foregoing method, the method of manufacturing includes additively manufacturing a casting article layer-by-layer using an additive manufacturing process and casting the component to include the plurality of vortex promoting features using the casting article.

In a further non-limiting embodiment of either of the foregoing methods, the method of manufacturing includes building the component to include the plurality of vortex promoting features layer-by-layer using an additive manufacturing process.

In a further non-limiting embodiment of any of the foregoing methods, the component is made of a ceramic material.

In a further non-limiting embodiment of any of the foregoing methods, the component is made of a refractory metal.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figures 2A and 2B illustrate a first embodiment of a gas turbine engine component.
Figures 3A and 3B illustrate a second embodiment of a gas turbine engine component.
Figure 4 illustrates an exemplary cooling scheme that may be employed by a gas turbine engine component.
Figure 5 illustrates a cooling scheme according to a second embodiment of this disclosure.
Figure 6 illustrates a cooling scheme according to yet another embodiment of this disclosure.
Figure 7 illustrates vortex promoting features of a cooling scheme.
Figure 8 illustrates a second embodiment of vortex promoting features.
Figure 9 illustrates an embodiment of vortex promoting features falling outside the scope of the claims.
Figure 10 yet another embodiment of vortex promoting features falling outside the scope of the claims.
Figure 11 illustrates a cavity of a cooling scheme.
Figure 12 illustrates another cavity of a cooling scheme.
Figure 13 illustrates yet another cavity of a cooling scheme.
Figure 14 illustrates a casting article that can be used to manufacture a gas turbine engine component that includes a cooling scheme with vortex promoting features.

### DETAILED DESCRIPTION

This disclosure is directed to a gas turbine engine component that includes one or more cooling cavities that employ vortex promoting features for inducing a vortexing fluid flow within the cavity. The vortex promoting features may be arranged in a helical pattern along the direction of flow through the cavity. Rotation of the cooling fluid along the helical path promotes a relatively high convective heat transfer coefficient, thereby removing additional amounts of heat from the component. The gas turbine engine component may be additively manufactured to include the vortex promoting features, or may be manufactured using an additively manufactured casting article that is configured to create the helical pattern inside the component during a casting process. These and other features are discussed herein.

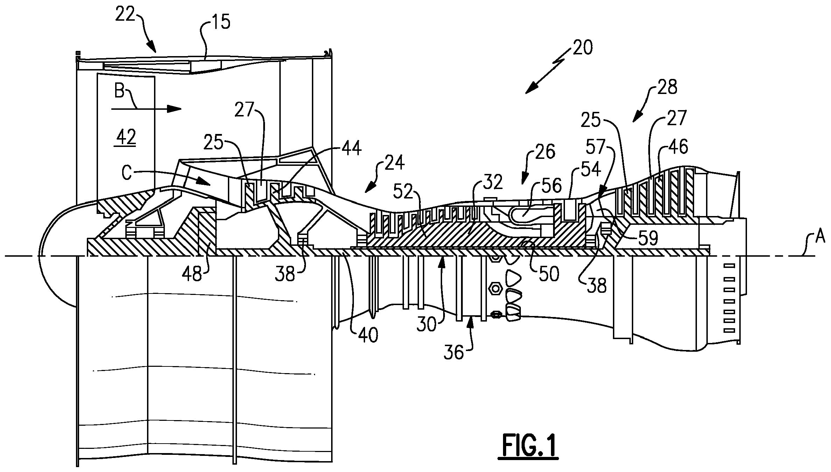

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}(where °R = K x 9/5). The "Low corrected fan tip speed" as disclosed herein according to one non-limiting embodiment is less than about 1150 ft / second (351 m/s).

Each of the compressor section 24 and the turbine section 28 may include alternating rows of rotor assemblies and vane assemblies (shown schematically). For example, the rotor assemblies can carry a plurality of rotating blades 25, while each vane assembly can carry a plurality of vanes 27 that extend into the core flow path C. The blades 25 create or extract energy in the form of pressure from the core airflow that is communicated along the core flow path C. The vanes 27 direct the core airflow to the blades 25 to either add or extract energy.

Various components of the gas turbine engine 20, including but not limited to the airfoils of the blades 25 and the vanes 27, may be subjected to repetitive thermal cycling under widely ranging temperatures and pressures. The hardware of the turbine section 28 is particularly subjected to relatively extreme operating conditions. Therefore, some components may require internal cooling schemes for cooling the parts during engine operation. Exemplary embodiments of such cooling schemes are discussed in greater detail below.

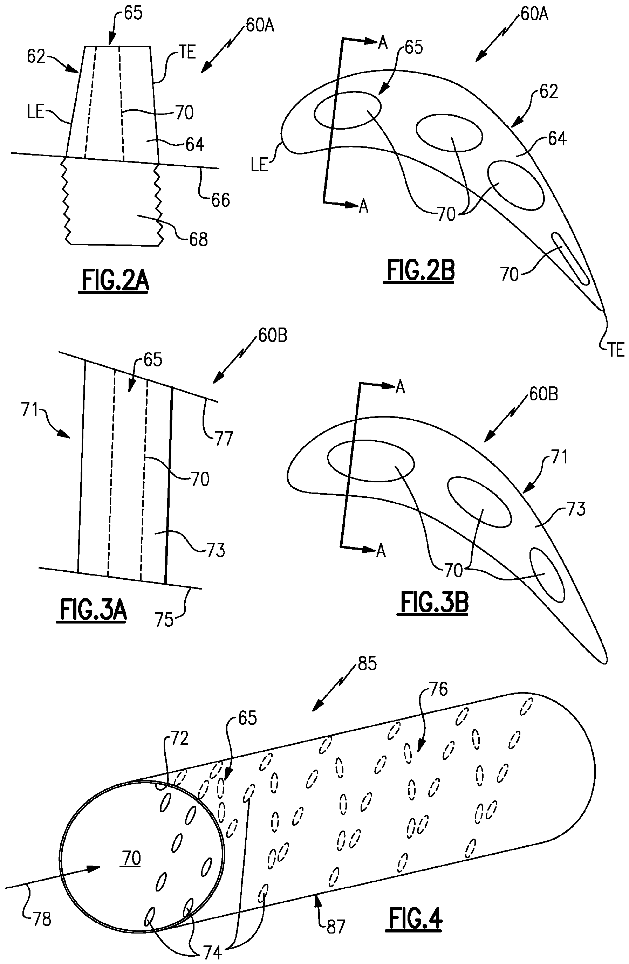

Figures 2A and 2B illustrate a component 60A having an internal cooling scheme 65 for cooling the component 60A. The component 60A may include a body 62 that defines both an external and internal shape of the component 60A. The body 62 extends between a leading edge LE and a trailing edge TE and may include an airfoil section 64, a platform 66 and a root 68. The airfoil section 64 extends outwardly in a first direction from the platform 66, and the root 68 extends from the platform 66 in an opposed, second direction away from the airfoil section 64.

The exemplary cooling scheme 65 may include one or more cavities 70 that are disposed through the body 62. The cavities 70 are shown schematically via dashed lines in Figure 2A, and it is to be understood that the cooling scheme 65 is not limited to the number of cavities 70 depicted by these figures. Although not shown, the cavity 70 may be fed with a cooling fluid, such as relatively cool bleed airflow sourced from the compressor section 24, for convectively cooling the component 60A.

In one embodiment, the cavities 70 are main cooling cavities of the cooling scheme 65. The cavities 70 may extend radially, axially and circumferentially inside of the body 62.

In the embodiment illustrated by Figures 2A and 2B, the component 60A is a blade, such as a turbine blade. It is to be understood; however, that the cooling schemes described herein are not limited for use in turbine blades and can be also employed within vanes, blade outer air seals (BOAS), combustor liners, casing structures, turbine exhaust case liners, or any other gas turbine engine component that might benefit from dedicated internal cooling, including some compressor components.

For example, a second non-limiting embodiment of a component 60B that may employ a cooling scheme 65 is illustrated by Figures 3A and 3B. In this embodiment, the component 60B is a vane. The component 60B may include a body 71 that includes an airfoil section 73 that extends between an inner platform 75 and an outer platform 77.

As discussed in greater detail below, the cooling schemes 65 described above may include a plurality of vortex promoting features that are arranged in a helical pattern to promote a vortexing flow of the cooling fluid communicated through the cavities 70. The vortexing flow of the cooling fluid through the cavities 70 promotes a higher convective heat transfer coefficient, thereby removing a greater amount of heat from the component and potentially reducing the need for film cooling.

Figure 4 illustrates a portion of a cooling scheme 65 that includes a cavity 70 disposed inside of a gas turbine engine component 85. The gas turbine engine component 85 could be a blade or vane (similar to those shown in Figures 2A, 2B and 3A, 3B), or any other gas turbine engine component that may benefit from dedicated internal cooling.

According to the invention the gas turbine engine component 85 includes a wall 72 extending inside of a body 87. The wall 72 circumscribes the cavity 70 of the cooling scheme 65. For ease of illustration, only a single cavity 70 has been illustrated. In other words, the cooling scheme 65 could include many additional features, including cavities, microcircuits, etc., that are not shown in this particular embodiment.

A plurality of vortex promoting features 74 may be formed or otherwise disposed on the wall 72. According to the invention the vortex promoting features 74 are arranged in a helical pattern 76 along the wall 72. The helical pattern 76 extends in a direction of flow 78 of the cooling fluid communicated within the cavity 70. In other words, the vortex promoting features 74 are implemented circumferentially in the cavity 70, varying in location along the direction of flow 78 within the cavity 70, to form the helical pattern 76. The helical pattern 76 may stretch over a portion of the cavity 70, or over the entire length of the cavity 70.

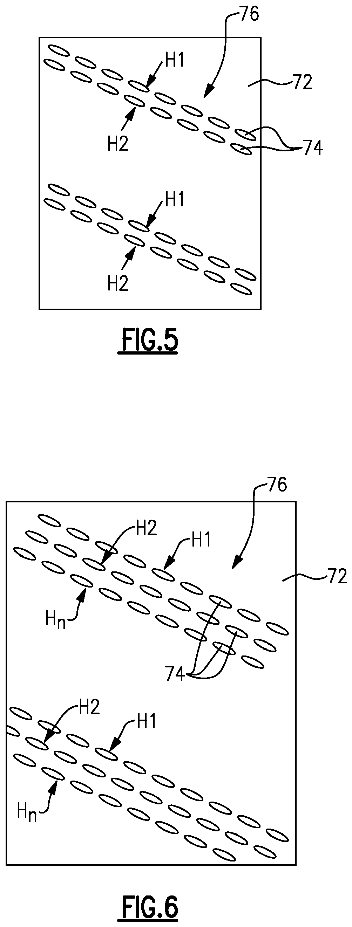

In one embodiment, the helical pattern 76 may be singularly helical (see Figure 4). In another embodiment, the helical pattern 76 may be dually helical (see Figure 5). A dually helical pattern includes two spaced apart helixes HI and H2 of vortex promoting features 74 that extend generally parallel to one another. In yet another embodiment, the helical pattern 76 may be made up of a plurality of helixes HI to Hₙ of vortex promoting features 74 (see Figure 6). In other words, the helical pattern 76 may be made up of any number helixes that extend relative to one another in composition. The helical pattern 76 may have a constant or variable pitch and circumference, and can be arranged to extend in either a clockwise or counterclockwise direction.

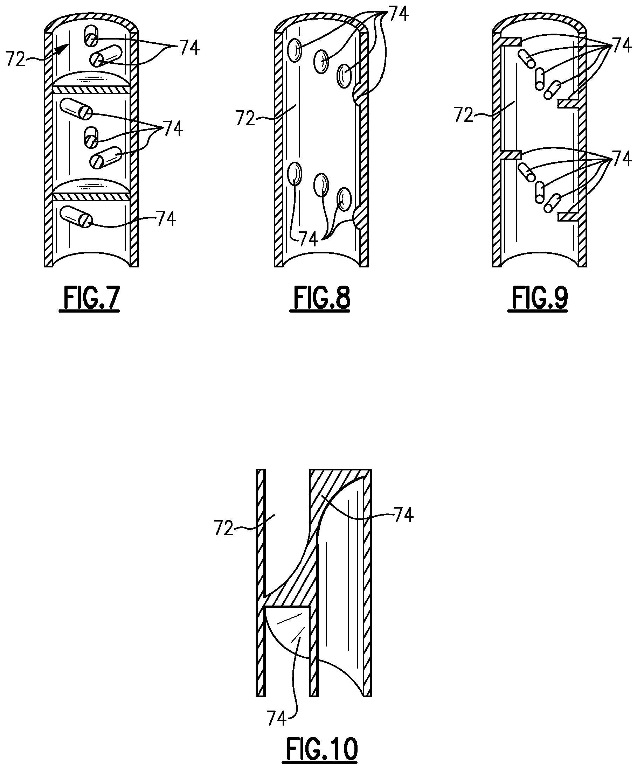

The vortex promoting features 74 may also embody a variety of sizes, shapes and configurations. The vortex promoting features 74 include pedestals (see Figure 7) or hemispherical protrusions (see Figure 8). Figures 9 and 10 show arrangements falling outside the scope of the claims, wherein the vortex promoting features 74 are fins and ribs respectively. The views depicted in Figures 7-10 are similar to a view through section A-A of Figures 2B and 3B, for example.

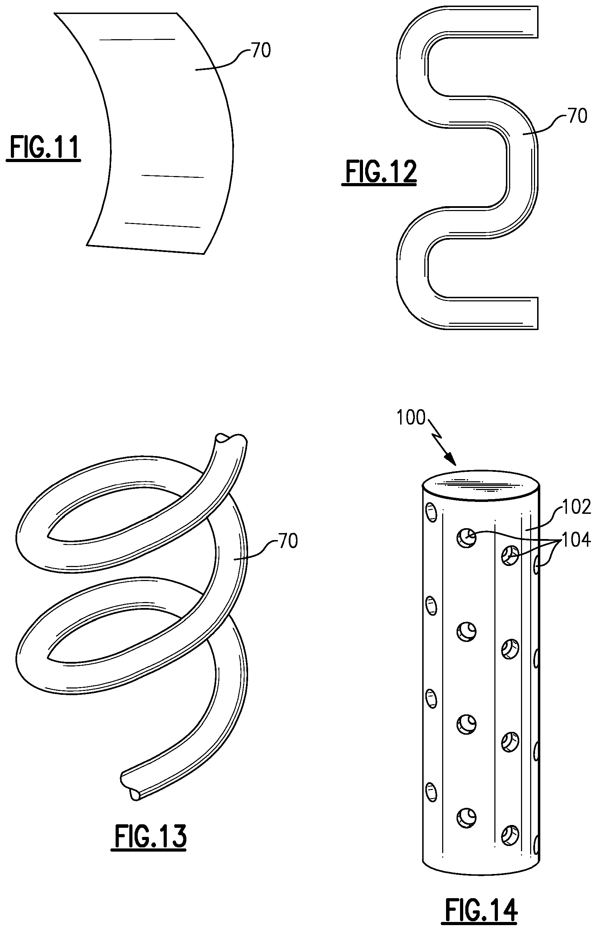

The cavity 70 of the cooling scheme 65 could also embody any of a variety of shapes and configurations. For example, the cavity 70 depicted in Figure 4 includes a straight shape. However, the cavity 70 could alternatively include a bowed shape (see Figure 11), a serpentine shape (see Figure 12), or a helical shape (see Figure 13). Other three dimensional shapes, including but not limited to contoured shapes and conical shapes, are also contemplated as within the scope of this disclosure. In combination with the helical pattern 76 of vortex promoting features 74, the shape of the cavity 70 may further contribute to the creation of an internal vortex of fluid flow within the cavity 70, thereby improving heat transfer.

Figure 14 illustrates an exemplary casting article 100 that can be additively manufactured and subsequently used in a casting operation to cast a gas turbine engine component (e.g., gas turbine engine components 60A, 60B, 85 or any other gas turbine engine component) that includes vortex promoting features that are disposed in a helical pattern, such as illustrated in Figures 4-10.

The exemplary casting article 100 includes a body 102 having a plurality of indents 104 that extend into the body 102. In one embodiment, the indents 104 are arranged in a helical pattern in order to form vortex promoting features disposed in a helical pattern along a wall of a cast gas turbine engine component.

In one embodiment, the casting article 100 is a casting core. However, a shell, gating, or other casting articles may also be additively manufactured and used to create a gas turbine engine component having vortex promoting features that are disposed in a helical pattern.

In one non-limiting additive manufacturing process, the casting article 100 is built layer-by-layer by delivering a powdered material, such as a ceramic material or refractory metal material, to a build platform. A layer of the powdered material is then melted at locations where the geometry of the casting article 100 is to exist. A laser, electron beam melting device or any other melting device may be used to melt the layers of powdered material. The build platform may then be moved and a second layer of powered material may be added and melted to prepare a second layer of the casting article. This layer-by-layer process may be repeated until the entire casting article 100 has been additively built.

In one embodiment, the layers of the casting article 100 may be joined to one another with reference to CAD data that defines a cross-section of a desired geometry of the casting article 100. Once additively manufactured, the casting article 100 may be used in a casting process to manufacture a gas turbine engine component having vortex promoting features arranged in a helical pattern. Alternatively, in another embodiment, the entirety of the gas turbine engine component may be additively manufactured to include vortex promoting features arranged in a helical pattern.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A gas turbine engine component (60A; 60B; 85), comprising:
a body (62; 71; 87);
a wall (72) extending inside of said body (62; 71; 87) wherein said wall (72) circumscribes a cavity (70) formed through said body (62; 71; 87); and
a plurality of vortex promoting features (74) arranged in a helical pattern (76) along said wall (72) wherein said helical pattern (76) extends along a direction of flow (78) through said cavity (70); **characterised in that**:
the vortex promoting features (74) are pedestals or hemispherical protrusions.

2. The component as recited in claim 1, wherein said component is one of a blade (25), a vane (27), a blade outer air seal (BOAS), a combustor liner and a turbine exhaust case liner.

3. The component as recited in claim 1 or 2, wherein said cavity (70) includes a bowed shape.

4. The component as recited in claim 1 or 2, wherein said cavity (70) includes a serpentine shape.

5. The component as recited in claim 1 or 2, wherein said cavity (70) includes a helical shape.

6. The component as recited in any preceding claim, wherein said helical pattern (76) is singularly helical.

7. The component as recited in any of claims 1 to 5, wherein said helical pattern (76) is dually helical.

8. The component as recited in claim 7, wherein said helical pattern (76) includes a first helix (HI) that extends in parallel with a second helix (H2).

9. The component as recited in any of claims 1 to 5, wherein said helical pattern (76) is multiply helical.

10. A gas turbine engine (20), comprising:
the component of any preceding claim, wherein said cavity (70) is configured to channel a cooling fluid to cool said component, and wherein the plurality of vortex promoting features (74) are configured to induce a vortexing flow of said cooling fluid through said cavity (70).

11. A method, comprising:
manufacturing a gas turbine engine component (60A; 60B; 85) to include a plurality of vortex promoting features (74) arranged in a helical pattern (76) along a wall (72) of the component (60A; 60B; 85), wherein the vortex promoting features (74) are pedestals or hemispherical protrusions, wherein said wall (72) circumscribes a cavity (70) formed through said body (62; 71; 87) and wherein said helical pattern (76) extends along a direction of flow (78) through said cavity (70).

12. The method as recited in claim 11, wherein the step of manufacturing includes:
additively manufacturing a casting article (100) layer-by-layer using an additive manufacturing process; and
casting the component (60A; 60B; 85) to include the plurality of vortex promoting features (74) using the casting article (100).

13. The method as recited in claim 11, wherein the step of manufacturing includes building the component (60A; 60B; 85) to include the plurality of vortex promoting features (74) layer-by-layer using an additive manufacturing process.

14. The method as recited in any of claims 11 to 13, wherein the component (60A; 60B; 85) is made of a ceramic material or a refractory metal.

15. The method as recited in claim 13 or 14, wherein the step of manufacturing includes providing a plurality of indents (104) in a body (102) of the casting article (100) arranged in a helical pattern.

## Patentansprüche

1. Gasturbinentriebwerkskomponente (60A; 60B; 85), umfassend:
einen Körper (62; 71; 87);
eine Wand (72), die sich innerhalb des Körpers (62; 71; 87) erstreckt, wobei die Wand (72) einen Hohlraum (70) umgrenzt, der durch den Körper (62; 71; 87) ausgebildet ist; und
eine Vielzahl von wirbelstimulierenden Merkmalen (74), die in einem spiralförmigen Muster (76) entlang der Wand (72) angeordnet sind, wobei sich das spiralförmige Muster (76) entlang einer Strömungsrichtung (78) durch den Hohlraum (70) erstreckt; **dadurch gekennzeichnet, dass**:
die wirbelstimulierenden Merkmale (74) Sockel oder halbkugelförmige Vorsprünge sind.

2. Komponente nach Anspruch 1, wobei die Komponente eine von einer Laufschaufel (25), einer Leitschaufel (27), einer äußeren Laufschaufelluftdichtung (BOAS), einer Brennkammerauskleidung und einer Turbinenabgasgehäuseauskleidung ist.

3. Komponente nach Anspruch 1 oder 2, wobei der Hohlraum (70) eine gekrümmte Form beinhaltet.

4. Komponente nach Anspruch 1 oder 2, wobei der Hohlraum (70) eine gewundene Form beinhaltet.

5. Komponente nach Anspruch 1 oder 2, wobei der Hohlraum (70) eine spiralförmige Form beinhaltet.

6. Komponente nach einem der vorhergehenden Ansprüche, wobei das spiralförmige Muster (76) einzigartig spiralförmig ist.

7. Komponente nach einem der Ansprüche 1 bis 5, wobei das spiralförmige Muster (76) dual spiralförmig ist.

8. Komponente nach Anspruch 7, wobei das spiralförmige Muster (76) eine erste Helix (H1) beinhaltet, die sich parallel zu einer zweiten Helix (H2) erstreckt.

9. Komponente nach einem der Ansprüche 1 bis 5, wobei das spiralförmige Muster (76) vielfach spiralförmig ist.

10. Gasturbinentriebwerk (20), umfassend:
die Komponente nach einem der vorhergehenden Ansprüche, wobei der Hohlraum (70) dazu konfiguriert ist, ein Kühlfluid zu leiten, um die Komponente zu kühlen, und wobei die Vielzahl von wirbelstimulierenden Merkmalen (74) dazu konfiguriert sind, um eine wirbelnde Strömung des Kühlfluids durch den Hohlraum (70) hervorzurufen.

11. Verfahren, umfassend:
Herstellen einer Gasturbinentriebwerkskomponente (60A; 60B; 85), um eine Vielzahl von wirbelstimulierenden Merkmalen (74) zu beinhalten, die in einem spiralförmigen Muster (76) entlang einer Wand (72) der Komponente (60A; 60B; 85) angeordnet ist, wobei die wirbelstimulierenden Merkmale (74) Sockel oder halbkugelförmige Vorsprünge sind, wobei die Wand (72) einen Hohlraum (70) umgrenzt, der durch den Körper (62; 71; 87) ausgebildet ist, und wobei sich das spiralförmige Muster (76) entlang einer Strömungsrichtung (78) durch den Hohlraum (70) erstreckt.

12. Verfahren nach Anspruch 11, wobei der Herstellungsschritt Folgendes beinhaltet:
schichtweises Additivherstellen eines Gießgegenstands (100) unter Verwendung eines Additivherstellungsprozesses; und Gießen der Komponente (60A; 60B; 85), um die Vielzahl von wirbelstimulierenden Merkmalen (74) unter Verwendung des Gießgegenstands (100) zu beinhalten.

13. Verfahren nach Anspruch 11, wobei der Herstellungsschritt das Aufbauen der Komponente (60A; 60B; 85) beinhaltet, um die Vielzahl von wirbelstimulierenden Merkmalen (74) schichtweise unter Verwendung eines Additivherstellungsprozesses zu beinhalten.

14. Verfahren nach einem der Ansprüche 11 bis 13, wobei die Komponente (60A; 60B; 85) aus einem keramischen Material oder einem hochschmelzenden Metall gefertigt ist.

15. Verfahren nach Anspruch 13 oder 14, wobei der Herstellungsschritt das Bereitstellen einer Vielzahl von Verzahnungen (104) in einem Körper (102) des Gießgegenstands (100) beinhaltet, der in einem spiralförmigen Muster angeordnet ist.

## Revendications

1. Composant de turbine à gaz (60A ; 60B ; 85), comprenant :
un corps (62 ; 71 ; 87) ;
une paroi (72) s'étendant à l'intérieur dudit corps (62 ; 71 ; 87) dans lequel ladite paroi (72) circonscrit une cavité (70) formée à travers ledit corps (62 ; 71 ; 87) ; et
une pluralité d'éléments favorisant la génération de tourbillons (74) disposés en un motif hélicoïdal (76) le long de ladite paroi (72) dans lequel ledit motif hélicoïdal (76) s'étend le long d'une direction d'écoulement (78) à travers ladite cavité (70) ;
**caractérisé en ce que** :
les éléments favorisant la génération de tourbillons (74) sont des socles ou des saillies hémisphériques.

2. Composant selon la revendication 1, dans lequel ledit composant est l'un parmi une pale (25), une aube (27), un joint d'étanchéité à l'air extérieur de pale (BOAS), une chemise de chambre de combustion et une chemise de carter d'échappement de turbine.

3. Composant selon la revendication 1 ou 2, dans lequel ladite cavité (70) comporte une forme courbée.

4. Composant selon la revendication 1 ou 2, dans lequel ladite cavité (70) comporte une forme en serpentin.

5. Composant selon la revendication 1 ou 2, dans lequel ladite cavité (70) comporte une forme hélicoïdale.

6. Composant selon une quelconque revendication précédente, dans lequel ledit motif hélicoïdal (76) est singulièrement hélicoïdal.

7. Composant selon l'une quelconque des revendications 1 à 5, dans lequel ledit motif hélicoïdal (76) est doublement hélicoïdal.

8. Composant selon la revendication 7, dans lequel ledit motif hélicoïdal (76) comporte une première hélice (H1) qui s'étend parallèlement à une seconde hélice (H2).

9. Composant selon l'une quelconque des revendications 1 à 5, dans lequel ledit motif hélicoïdal (76) est multi-hélicoïdal.

10. Turbine à gaz (20), comprenant :
le composant selon une quelconque revendication précédente, dans laquelle ladite cavité (70) est conçue pour canaliser un fluide de refroidissement pour refroidir ledit composant, et dans laquelle la pluralité d'éléments favorisant la génération de tourbillons (74) sont conçus pour induire un écoulement de tourbillonnement dudit fluide de refroidissement à travers ladite cavité (70).

11. Procédé, comprenant :
la fabrication d'un composant de turbine à gaz (60A ; 60B ; 85) pour inclure une pluralité d'éléments favorisant la génération de tourbillons (74) disposés en un motif hélicoïdal (76) le long d'une paroi (72) du composant (60A ; 60B ; 85), dans lequel les éléments favorisant la génération de tourbillons (74) sont des socles ou des saillies hémisphériques, dans lequel ladite paroi (72) circonscrit une cavité (70) formée à travers ledit corps (62 ; 71 ; 87) et dans lequel ledit motif hélicoïdal (76) s' étend le long d'une direction d'écoulement (78) à travers ladite cavité (70).

12. Procédé selon la revendication 11, dans lequel l'étape de fabrication comporte :
la fabrication additive d'un article de moulage (100) couche par couche en utilisant un processus de fabrication additive ; et le moulage du composant (60A ; 60B ; 85) pour inclure la pluralité d'éléments favorisant la génération de tourbillons (74) à l'aide de l'article de moulage (100).

13. Procédé selon la revendication 11, dans lequel l'étape de fabrication comporte la construction du composant (60A ; 60B ; 85) pour inclure la pluralité d'éléments favorisant la génération de tourbillons (74) couche par couche à l'aide d'un processus de fabrication additive.

14. Procédé selon l'une quelconque des revendications 11 à 13, dans lequel le composant (60A ; 60B ; 85) est constitué d'un matériau céramique ou d'un métal réfractaire.

15. Procédé selon la revendication 13 ou 14, dans lequel l'étape de fabrication comporte la fourniture d'une pluralité d'empreintes (104) dans un corps (102) de l'article de moulage (100) disposées en un motif hélicoïdal.
